Europäisches Patentamt

European Patent Office

Office européen des brevets

(11) Veröffentlichungsnummer: **0 078 375**
A1

# (12) EUROPÄISCHE PATENTANMELDUNG

(21) Anmeldenummer: 82107877.1

(51) Int. Cl.³: **B 62 K 21/12**

(22) Anmeldetag: 27.08.82

(30) Priorität: 31.10.81 DE 3143266

(43) Veröffentlichungstag der Anmeldung: 11.05.83
Patentblatt 83/19

(84) Benannte Vertragsstaaten: **AT BE CH DE FR GB IT LI LU NL SE**

(71) Anmelder: **Klose, Odo, Prof., Am Freudenberg 19, D-5600 Wuppertal 1 (DE)**

(72) Erfinder: **Klose, Odo, Prof., Am Freudenberg 19, D-5600 Wuppertal 1 (DE)**

(74) Vertreter: **Rieder, Hans-Joachim, Dr. et al, Corneliusstrasse 45, D-5600 Wuppertal 11 (DE)**

(54) Fahrradlenker.

(57) Die Erfindung betrifft einen Fahrradlenker (1) mit vom Lenkgabelkopf ausgehendem, nach aufwärts und vorwärts gerichtetem Tragarm (3), von dem seitwärts gerichtete Ausleger (8, 9) ausgehen, an die sich etwa parallel zur Fahrradlängsrichtung verlaufende, Griffabschnitte (G 1) anschließen und schlägt zur Erzielung einer stabilen, benutzungssicheren sowie verschiedene Greifmöglichkeiten bringenden Bauform vor, daß die Griffabschnitte (G 1) die kürzeren Schenkel (7) eines in sich geschlossenen, oberhalb des Lenkgabelkopfes liegenden Rahmens (R) bilden, dessen, von den Griffabschnitten (G 1) und vier Auslegern (8, 8; 9, 9) umspannte Rahmenfläche quer zum aufwärts verlaufenden Abschnitt des Tragarmes (3) liegt.

Fahrradlenker

Die Erfindung bezieht sich auf einen Fahrradlenker mit vom Lenkgabelkopf ausgehendem, nach aufwärts und vorwärts gerichtetem Tragarm, von dem seitwärts gerichtete Ausleger ausgehen, an die sich etwa parallel zur Fahrradlängsrichtung verlaufende Griffabschnitte anschließen.

Fahrradlenker dieser Art bilden durch ihre frei endenden Griffabschnitte stets eine gewisse Verletzungsgefahr, dies obwohl polsternd wirkende Gummischuhe auf die wie Hörner abstehende Griffabschnitte aufgesteckt werden. Was den Fahrkomfort angeht, so fällt immer wieder der Mangel an eine Abwechselung in der Haltung des Fahrenden bringende Greifmöglichkeiten auf. Schließlich gibt es noch stabilisatorische Schwachzonen insofern, als die freien Greifabschnitte doch einen nicht unerheblichen Hebel bilden; bei größeren Überbelastungen kommt es dabei zu Verbiegungen oder auch Beeinträchtigungen der Grundstellung des Lenkers am Tragarm.

Aufgabe der Erfindung ist es, einen gattungsgemäßen Fahrradlenker in stabiler, herstellungstechnisch einfacher, benutzungsgünstigerer Weise so auszubilden, daß zum einen frei endende Griffabschnitte vermieden sind, andererseits aber die Fahrhaltung des Benutzers durch eine Mehrzahl von Greifmöglichkeiten abwechslungsreicher und somit bequemer wird.

Gelöst ist diese Aufgabe durch die im Anspruch 1 angegebene Erfindung.

Die Unteransprüche sind vorteilhafte Weiterbildungen des Fahrradlenkers.

Zufolge solcher Ausgestaltung ist ein Fahrradlenker geschaffen, der sowohl dem Sicherheitsbedürfnis als auch dem der bequemeren Fahrradbe-

17 576   P 1/P/G/Lg.   24.8.1982

nutzung besser Rechnung trägt. Es liegen keine hörnerartig abstehenden Griffabschnitte mehr vor. Der Lenker ist vielmehr zu einem in sich geschlossenen, oberhalb des Lenkgabelkopfes liegenden Rahmen weitergestaltet. Dessen kürzere Schenkel bilden die in etwa in Fahrradlängsrichtung verlaufenden Griffabschnitte unter Verwirklichung der üblichen Benutzungsweise. Hinzu kommen weitere Greifmöglichkeiten durch die vier, die geschlossene Rahmenfläche mit umschließenden Ausleger. Diese Rahmenfläche erstreckt sich quer zum aufwärts verlaufenden Abschnitt des Tragarmes. Letztere kann mittels einer Querschelle daran angreifen. Aus der ansteigenden Vorwärtslage ergeben sich in vorteilhafter Weise zwei unterschiedliche Greifhöhen. Die sattelseitigen Ausleger liegen dabei tiefer. Die geschlossene Rahmenform ist auch stabiler gegenüber abbiegenden Kräften. In vorteilhafter Weiterbildung wird sodann vorgeschlagen, daß die Verlängerung der Rahmenfläche und die Verlängerung des aufwärts verlaufenden Tragarmabschnittes sich in einem Punkt rückwärtig der sattelseitigen Ausleger schneiden. Hierdurch liegt eine größere Kniefreiheit auch bei Fahren enger Kurven vor. In dieser Hinsicht wirkt sich auch die Maßnahme günstig aus, daß die Rahmenfläche nach oben hin, und zwar quer zur Fahrtrichtung konkav gestaltet ist. Die bauliche Maßnahme, daß der vorwärts gerichtete Tragarmabschnitt als Mitteltraverse des Rahmens ausgebildet ist, führt praktisch zu einem weiteren stabilisierenden Rahmenschenkel, und zwar im Bereich der Stelle, die der größten Belastung unterliegt. In diesem Zusammenhang ist es weiter von Vorteil, daß das Ende des vorwärts gerichteten Tragarmabschnittes höhengleich mit dem vorderen Ausleger abschließt und der rückwärtige Ausleger auf der Oberseite des vorwärts gerichteten Tragarmabschnittes aufliegt. Die Aufliegestelle kann als Schweißstelle ausgebildet sein. Eine zusätzliche Funktion erhält die Mitteltraverse insofern, als der vorwärts gerichtete Tragarmabschnitt in diesem Bereich umfaßt ist von einem unter der Rahmenfläche sitzenden Fahrradleuchten-Tragkörper. Letzterer ist so wirksam geschützt, vor allem durch den ihn dachartig überfangenden lenkerbildenden Rahmen. Eine Benutzung dahingehend, die Muldenform des Lenkers auszunutzen zur Ablagerung irgendwelcher mitzuführender Gegenstände, wirkt sich in gar keiner Weise nachteilig auf den Fahrradleuchten-Tragkörper aus. Die etwaigen Schweiß- oder sonstigen Verbindungsstellen können nachbearbeitungsfrei in der Weise einfach der Sicht entzogen werden, daß der Fahrradleuchten-Tragkörper in eine Kunststoff-Umspritzung des Rahmens integriert ist derart, daß die Breite der Traverse etwa dem Durchmesser der Fahrradleuchte entspricht. Dadurch, daß weiter an den Unterseiten der Ausleger die Enden bügelförmiger Betätigungshebel, insbesondere Bremsbetätigungshebel, angelenkt sind, welche geometrisch ähnlich gestaltet und gleichsinnig gerichtet sind zu dem von den Gelenkstellen an nach auswärts reichenden Rahmenverlauf, ergibt sich eine hochstabile Betätigungshebellagerung, wobei der Benutzungsvorteil vorliegt, daß der entsprechende Betätigungshebel von allen drei Greifpositionen her sicher betätigt werden kann. Schließlich ist es noch von Vorteil, daß die Oberseite der Mitteltraverse als Armaturenbrett gestaltet ist, welches die üblichen Funktionsteile wie Gangschalt-Betätigungseinrichtung, Klingel, Kilometerzähler etc. aufweist.

Weitere Vorteile und Einzelheiten des Gegenstandes der Erfindung sind nachstehend anhand eines zeichnerisch veranschaulichten Ausführungsbeispieles näher erläutert. Es zeigt:

Fig. 1 ein mit dem erfindungsgemäßen Lenker ausgerüstetes Fahrrad in Seitenansicht,

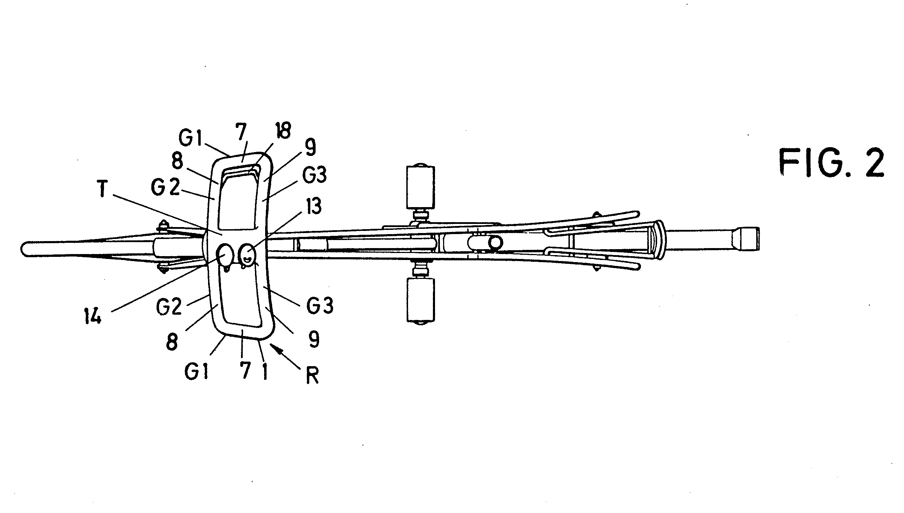

Fig. 2 die Draufsicht hierzu,

Fig. 3    den Fahrradlenker in Einzeldarstellung aus Blickrichtung A in

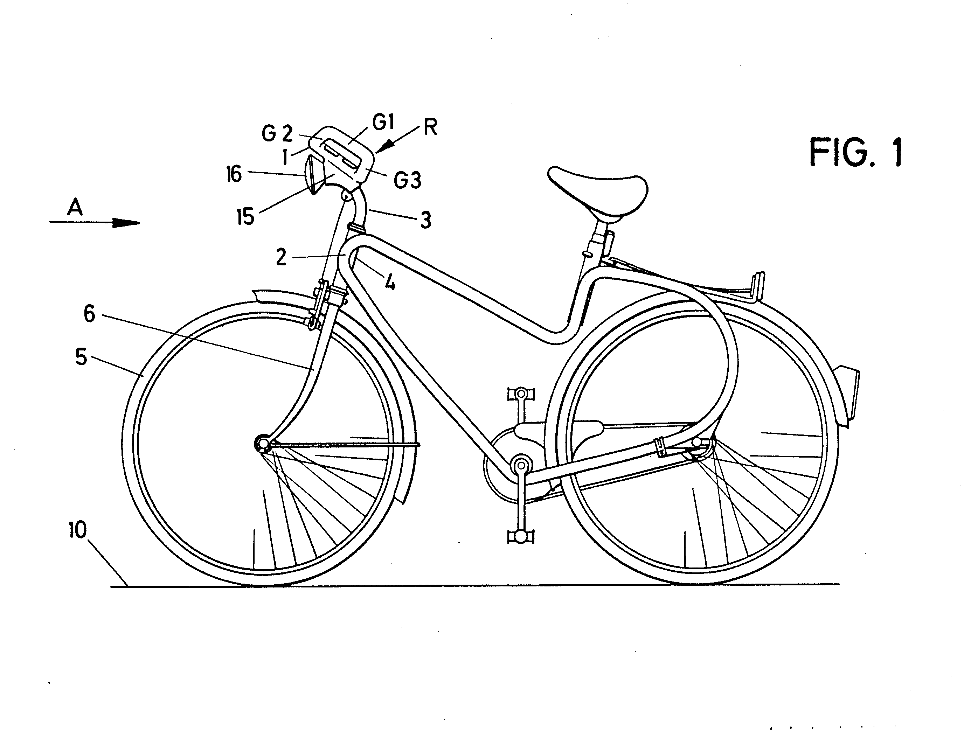

Fig. 1 (vergrößert),

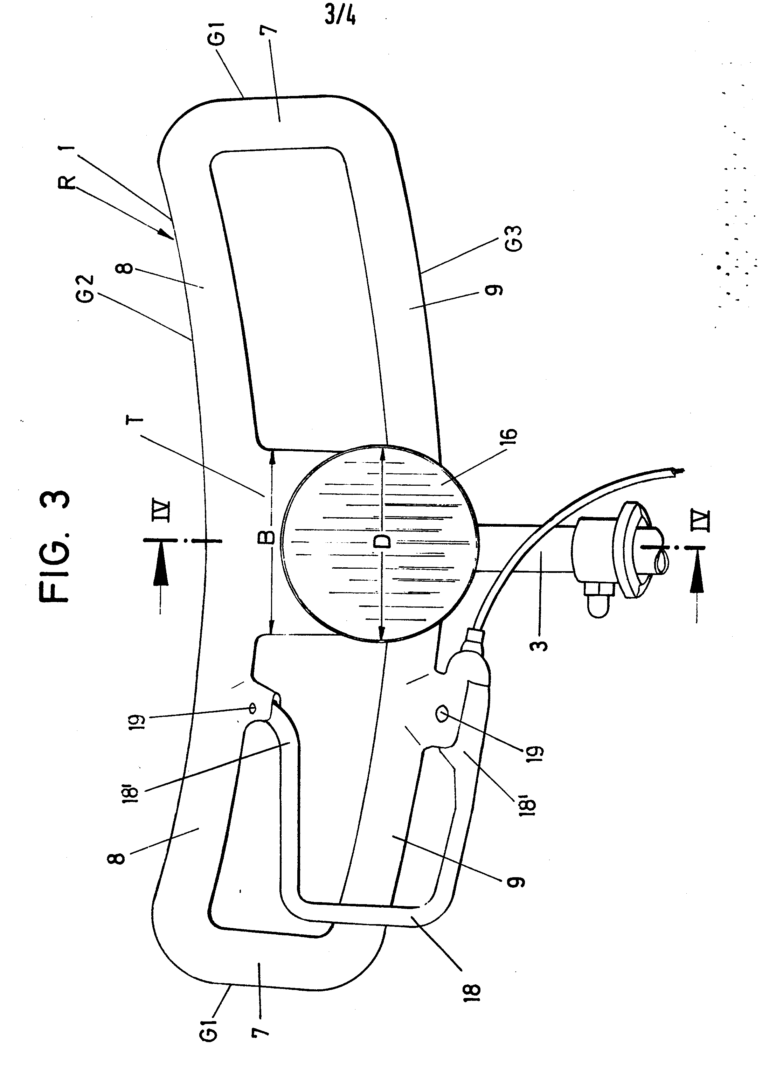

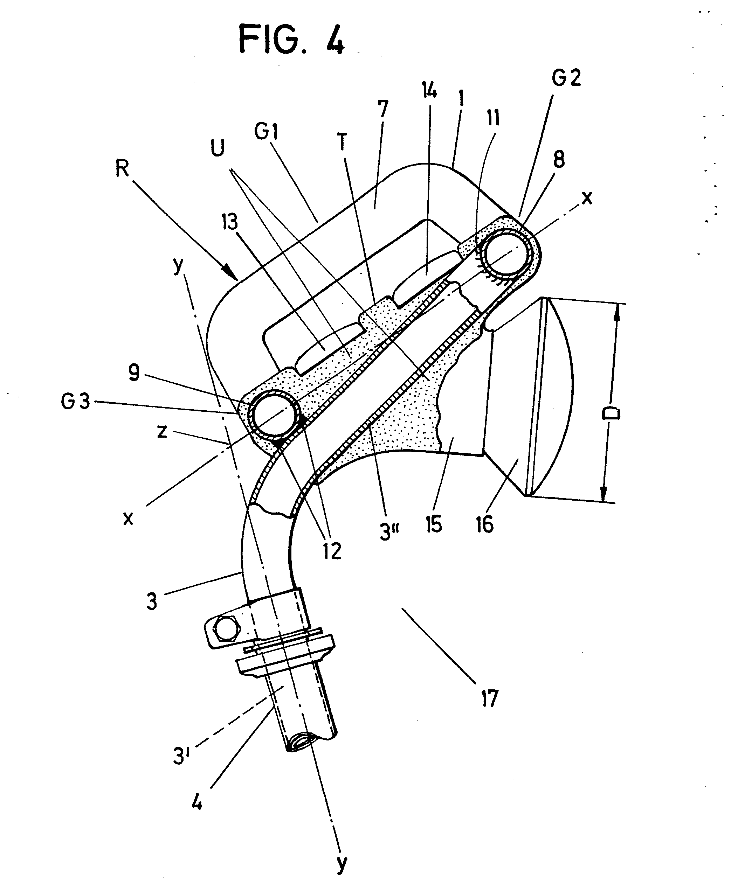

Fig. 4    den Schnitt gemäß Linie IV-IV in Fig. 3.

Der Fahrradlenker 1 sitzt an einem vom Gabelkopf 2 ausgehenden Tragarm 3.

Der Tragarm 3 ist fest mit dem in einer Büchse 4 gelagerten Stiel einer das Vorderrad 5 führenden Lenkgabel 6 verbunden. Oberhalb der Büchse 4 nimmt der Tragarm einen gekrümmten, in Fahrtrichtung dann ansteigenden Verlauf. Dieser Tragarmabschnitt ist mit 3'' bezeichnet. Der genannte Tragarm besteht aus Rohr runden Querschnitts.

Der Fahrradlenker ist in Form eines Rahmens R gestaltet. Die kürzeren Schenkel 7 bilden seitwärts gerichtete Griffabschnitte G 1 und die längeren Schenkel im wesentlichen quer zur Fahrtlängsrichtung verlaufende Ausleger 8 und 9. Deren Übergänge zu den Griffabschnitten G 1 sind gerundet. Insgesamt liegen vier Ausleger 8, 9 vor, die zusammen mit den kürzeren Schenkeln den geschlossenen Rahmen R bilden, dessen von den Teilen 7 bis 9 umschriebene Rahmenfläche quer zum aufwärts verlaufenden Abschnitt 3' des Tragarmes 3 liegt.

Der Steigungswinkel des vorwärtsgerichteten Tragarmabschnittes 3'' beträgt ca. 35° zur horizontalen Standfläche 10 des Fahrrades. Die Zuordnung von Rahmen R und vorwärts gerichtetem Tragarmabschnitt 3'' ist so gewählt, daß die Verlängerung der Rahmenfläche (vergl. Linie x-x) und die Verlängerung des aufwärts verlaufenden, vor dem Krümmungsbereich liegenden Tragarmabschnittes 3' (vergl. Linie y-y) sich in einem Punkt z rückwärtig der sattelseitigen Ausleger 9 schneiden. Der gesamte

17 576    P 1/P/G/Lg.    24.8.1982

0078375

Lenkerbereich ist dadurch eine vergrößerte Kniefreiheit bringend vorverlagert. Die umschriebene Rahmenfläche ist nach oben hin konkav gestaltet. Das ergibt sich besonders deutlich aus Fig. 3. Die daraus resultierende Höherverlegung der die Griffabschnitte G 1 bildenden Schenkel 7 entspricht etwa der dreifachen Rohrdicke des für die Bildung des Rahmens R verwendeten Materiales. Die Breite des lenkerbildenden Rahmens entspricht in etwa denen klassischer Lenker. Die Ausleger 8, 9 können parallel verlaufen oder quer zur Fahrtrichtung hin nach außen konvergieren.

Die Befestigung des rahmenförmigen Fahrradlenkers am Tragarmabschnitt 3" erfolgt durch Schweißung. Dessen freies Stirnende greift an der Rahmeninnenseite der Lenker 8 an. Die diesbezügliche, in der Symmetrieebene des Fahrradlenkers liegende Schweißstelle ist mit 11 bezeichnet. Die zweite Verbindungsstelle an den Auslegern 9 ist so gelegt, daß der rückwärtige Ausleger auf der Oberseite des vorwärts gerichteten Tragarmabschnittes 3" aufliegt. Diese Schweißstelle trägt das Bezugzeichen 12. Das verwendete Rohrmaterial weist sowohl bezüglich des Rahmens R als auch des Tragarmes 3 den gleichen Durchmesser auf, so daß das Ende des vorwärts gerichteten Tragarmabschnittes 3" höhengleich mit den vorderen Auslegern 8 abschließen kann.

Der vorwärts gerichtete Tragarmabschnitt 3" ist als Mitteltraverse T des Rahmens R ausgebildet.

Die Oberseite dieser Traverse erfüllt die Funktion eines Armaturenbretts. Sie ist Träger einer Gangschalteinrichtung 13, einer Klingel 14 und gegebenenfalls eines allerdings nicht näher dargestellten Kilometerzählers.

17 576    P 1/P/G/Lg.    24.8.1982

Der vorwärts gerichtete Tragarmabschnitt 3'' ist umfaßt von einem unter der Rahmenfläche sitzenden Fahrradleuchten-Tragkörper 15. Letzterer ist in eine Kunststoff-Umspritzung U des Rahmens sowie der Mitteltraverse T integriert, und zwar derart, daß die Breite D der Mitteltraverse etwa dem Durchmesser D der Fahrradleuchte 16 entspricht. Bezüglich der Kunststoffumspritzung kann von einem zähen Polyurethanschaum mit integrierter Außenhaut ausgegangen werden. Ein solcher Beschichtungsstoff wirkt sich bezüglich der drei Griffabschnitte G 1 (Schenkel 7) sowie der beiden anderen Griffabschnitte G 2 und G 3, welch letztere von den Auslegern 8, 9 gebildet sind, griffigkeitsfördernd aus.

Die Fahrradleuchte 16 liegt so geschützt in einem vom Rahmen R und der Traverse dachförmig überfangenen, stumpfwinkligen Schutzraum 17. In diesem liegt auch der an der Unterseite der Ausleger 8, 9 mit seinen Enden 18' angelenkte Brems-Betätigungshebel 18. Dessen Gelenkstellen sind mit 19 bezeichnet (vergl. Fig. 3). Die Bügelform des Bremsbetätigungshebels ist den griffabschnittbildenden Partien des Rahmens geometrisch ähnlich gestaltet und gleichsinnig ausgerichtet zu dem von den Gelenkstellen 19 an auswärts weisenden Rahmenverlauf.

Der Rahmen-Lenker kann auch an motorgetriebenen Zweirädern, sogenannten Mofas, verwendet werden.

Alle in der Beschreibung erwähnten und in der Zeichnung dargestellten neuen Merkmale sind erfindungswesentlich, auch soweit sie in den Ansprüchen nicht ausdrücklich beansprucht sind.

Patentansprüche

1. Fahrradlenker mit vom Lenkgabelkopf ausgehendem, nach aufwärts und vorwärts gerichtetem Tragarm, von dem seitwärts gerichtete Ausleger ausgehen, an die sich etwa parallel zur Fahrradlängsrichtung verlaufenden Griffabschnitte anschließen, dadurch gekennzeichnet, daß die Griffabschnitte (G 1) die kürzeren Schenkel (7) eines in sich geschlossenen, oberhalb des Lenkgabelkopfes (2) liegenden Rahmens (R) bilden, dessen, von den Griffabschnitten (G 1) und vier Auslegern (8, 8; 9, 9) umspannte Rahmenfläche quer zum aufwärts verlaufenden Abschnitt (3') des Tragarmes (3) liegt.

2. Fahrradlenker nach Anspruch 1, dadurch gekennzeichnet, daß die Verlängerung der Rahmenfläche (Linie x-x) und die Verlängerung (Linie y-y) des aufwärts verlaufenden Tragarmabschnittes (3') sich in einem Punkt (z) rückwärtig der Ausleger (9) schneiden.

3. Fahrradlenker nach Anspruch 1, dadurch gekennzeichnet, daß die Rahmenfläche nach oben hin konkav gestaltet ist.

4. Fahrradlenker nach Anspruch 1, dadurch gekennzeichnet, daß der vorwärts gerichtete Tragarmabschnitt (3'') als Mitteltraverse (T) des Rahmens (R) gebildet ist.

0078375

5. Fahrradlenker nach Anspruch 4, dadurch gekennzeichnet, daß das Ende des vorwärts gerichteten Tragarmabschnittes (3") höhengleich mit dem vorderen Ausleger (8) liegt und der rückwärtige Ausleger (9) auf der Oberseite des vorwärts gerichteten Tragarmabschnittes (3") aufliegt.

6. Fahrradlenker nach Anspruch 5, dadurch gekennzeichnet, daß der vorwärts gerichtete Tragarmabschnitt (3") umfaßt ist von einem unter der Rahmenfläche sitzenden Fahrradleuchten-Tragkörper (15).

7. Fahrradlenker nach Anspruch 6, dadurch gekennzeichnet, daß der Fahrradleuchten-Tragkörper (15) in eine Kunststoffumspritzung (U) des Rahmens (R) integriert ist derart, daß die Breite (B) der Mitteltraverse (T) etwa dem Durchmesser (D) der Fahrradleuchte (16) entspricht.

8. Fahrradlenker nach Anspruch 1, dadurch gekennzeichnet, daß an den Unterseiten der Ausleger (8, 8; 9, 9) die Enden (18') bügelförmiger Betätigungshebel, insbesondere Bremsbetätigungshebel (18), angelenkt sind, welche geometrisch ähnlich gestaltet und gleichsinnig gerichtet sind zu dem von den Gelenkstellen (19) an nach auswärts reichenden Rahmenverlauf.

9. Fahrradlenker nach Anspruch 4, dadurch gekennzeichnet, daß die Oberseite der Mitteltraverse (T) als Armaturenbrett gestaltet ist.

17 576   P 1/P/G/Lg.   24.8.1982

0078375

FIG. 1

0078375

FIG. 2

FIG. 3

0078375

3/4

FIG. 4

0078375

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | B 62 K 21/12 |
| Y | FIETSEN, BROMFIETSEN, ONDERDELEN, TOEBEHOREN, VAKBLAD VOOR HANDEL EN INDUSTRIE, Band 45, 5. November 1965, Seiten 1040-1041, Nijmegen, NL. "Beumer-fiets een juweeltje van vakmanschap" * Figur * | 1 | |
| | --- | | |
| Y | US-A-3 933 373 (GAMMELGAARD) * Figur 1; Spalte 1, Zeilen 45-65 * | 1,4 | |
| | --- | | |
| A | GB-A- 431 264 (PARTRIDGE) * Figur 1 * | 1 | |
| | --- | | |
| A | CH-A- 122 721 (GAZDA) * Figur 4; insgesamt * | 3 | RECHERCHIERTE SACHGEBIETE (Int. Cl. 3) |
| | --- | | |
| A | DE-A-2 916 437 (MAGENWIRTH) | 9 | B 62 K |
| | ----- | | |

Der vorliegende Recherchenbericht wurde für alle Patentansprüche erstellt.

| Recherchenort DEN HAAG | Abschlußdatum der Recherche 31-01-1983 | Prüfer GEMMELL R.I.D. |
|---|---|---|